# EUROPÄISCHE PATENTSCHRIFT

(11) **EP 2 984 741 B1**
(45) Veröffentlichungstag und Bekanntmachung des Hinweises auf die Patenterteilung: **12.04.2023**
(21) Anmeldenummer: 14701066.4
(22) Anmeldetag: 21.01.2014
(51) Int. Cl.: F02M 26/54, F16K 1/22, F02M 26/00, F02D 9/10, F16F 1/373, H02K 5/24

(54) **ANTRIEBSANORDNUNG FÜR EIN AGGREGAT EINES VERBRENNUNGSMOTORS UND ABGASRÜCKFÜHRVENTIL**
MOTOR FOR AN EGR VALVE
DISPOSITIF MOTEUR POUR UNE VALVE DE RECIRCULATION DES GAZ D'ECHAPPEMENT

(30) Priorität: 27.02.2013 DE 102013101938
(43) Veröffentlichungstag der Anmeldung: 17.02.2016
(73) Patentinhaber: Pierburg GmbH, 41460 Neuss (DE)
(72) Erfinder: SARI, Osman, 41516 Grevenbroich (DE); SIMONS, Norbert, 40233 Düsseldorf (DE); SABIC, Robert, 41460 Neuss (DE); BOHNEN, Manfred, 41189 Mönchengladbach (DE)
(74) Vertreter: terpatent Patentanwälte ter Smitten Eberlein-Van Hoof Rütten Daubert
(86) Internationale Anmeldenummer: PCT/EP2014/051139
(87) Internationale Veröffentlichungsnummer: WO 2014/131558

(56) Entgegenhaltungen:
- EP-A2- 0 909 005
- EP-A2- 1 126 156
- EP-A2- 1 544 438
- WO-A1-03/005532
- DE-A1- 10 344 624
- DE-A1-102004 017 300
- US-A- 5 786 647
- US-A1- 2006 157 027

## Beschreibung

Die Erfindung betrifft eine Antriebsanordnung für ein Aggregat eines Verbrennungsmotors mit einem Antriebselement, einem Gehäuse und einem Zwischenelement, welches vorgespannt zwischen dem Antriebselement und dem Gehäuse angeordnet ist sowie ein Abgasrückführventil mit einer derartigen Antriebsanordnung mit einem als Antriebselement dienenden Elektromotor und einem Gehäuse, in dem der als Antriebselement dienende Elektromotor angeordnet ist, der über ein Getriebe ein Ventil antreibt, welches einen Durchlass zwischen einem Einlass und einem Auslass beherrscht.

Derartige Antriebsanordnungen dienen zum Antrieb unterschiedlicher Aggregate in Verbrennungsmotoren. Hier ist zwischen Aggregaten zu unterscheiden, die kontinuierlich oder zumindest über einen längeren Zeitraum betrieben werden, wie beispielsweise Pumpen zur Förderung von Luft, Abgas, Kühlmittel oder anderen hydraulischen Fluiden und Aggregaten, deren Antrieb nur über einen definierten Stellbereich wirkt, wie beispielsweise Ventilen und Klappen, insbesondere Abgasrückführventilen, Abgasklappen oder Drosselklappen.

Alle diese Antriebe sind im Verbrennungsmotor großen Schwing- und Stoßbelastungen ausgesetzt, so dass das Antriebselement möglichst gut gedämpft sowohl radial als auch axial gelagert werden muss, um Beschädigungen am Antriebselement zu vermeiden.

Es ist daher bekannt geworden, Zwischenelemente zur Befestigung eines Stellmotors zu verwenden, die diese dämpfende Wirkung der Lageraufnahme verbessern sollen.

So ist aus der DE 10 2006 046 451 A1 eine Lagerung eines metallgekapselten Gleichstrom-Elektromotors in einem Gehäuse aus synthetischem Harz für eine Drosselklappe bekannt. Wegen der unterschiedlichen Verformbarkeit des synthetischen Harzes und des Metallgehäuses des Elektromotors ist ersteres vor einer schleichenden Verformung zu schützen. Aus diesem Grunde ist zwischen dem wellenlosen Ende des Elektromotors und dem Harz-Gehäuse ein elastischer Körper vorgesehen, dessen Anlagefläche am Harz-Gehäuse größer ist als diejenige Anlagefläche, die am Metallgehäuse anliegt. Der elastische Körper umfasst eine metallische Scheibe, an deren Vorderseite trapezförmige Gummi-Nocken ausgebildet sind. Nachteilig ist hier jedoch die stoffschlüssige Verbindung zwischen Gummi-Nocken und Metallscheibe. Des Weiteren findet die radiale Sicherung des Elektromotors lediglich über die Befestigung am A-Lagerschild statt.

Weiter ist es aus der US 6,860,466 B2 bekannt, das freie Ende des Gleichstrommotors mittels eines metallischen Rings radial im Gehäuse des Drosselventils zu lagern. Daneben schlägt die EP 1 544 438 A2 einen metallischen Anti-Vibrationsring zur Verspannung von Elektromotor und Gehäuse vor. Auch ist es bekannt, axial zwischen Gehäuse und Motor einen O-Ring zur Schwingungsdämpfung anzusiedeln. Eine radiale toleranzunempfindliche Lagerung auch am B-Lager ist aus dem Stand der Technik jedoch nicht bekannt.

Hierzu wird in der DE 10 2004 017 300 A1 ein zweiteiliges Zwischenelement zur Lagerung des Antriebs eines Sekundärluftgebläses am A-Lagerschild und an einer Stützscheibe im Bereich des B-Lagers vorgeschlagen. Dieses weist sowohl zur radialen als auch zur axialen Lagerung entsprechende Ausformungen auf. Der Zusammenbau dieser Lagerung ist jedoch sehr aufwendig. Insbesondere die Befestigung der Stützscheibe am Gehäuse und deren richtige Positionierung, um die gewünschte Wirkung des Zwischenelementes zu erhalten, sind schwierig.

Zusätzlich ist aus der WO 03/005532 A1 ein Gebläse bekannt, welches über einen in einem Gehäuse angeordneten Elektromotor angetrieben wird. Das Gehäuse kann an einem Trägerelement einer Klimaanlage befestigt werden. Im Inneren des Gehäuses ist eine elastomere Schicht ausgebildet, die auch elastische Trägerarme bedeckt, über die der Elektromotor im Gehäuse befestigt ist.

Des Weiteren ist aus der EP 0 909 005 A2 ein Elektromotor bekannt, an dessen B-Lager ein akustisches Dämpfungsmittel angeordnet ist, welches die Lageraufnahme des Elektromotors radial umgibt und axial gegen den das Gehäuse verschließenden Deckel anliegt.

Zusätzlich ist aus der US 5,786,647 A eine Antriebsanordnung bekannt, bei der zwei Gehäuseteile gegeneinander geschoben sind, wobei beide Gehäuseteile eine Öffnung zur Aufnahme der Lager aufweisen. Hierzu sind zwischen den Lagern zweiteilige Aufnahmen gebildet, die am Motor befestigt und in die Öffnungen der Gehäusetelle eingesetzt sind.

Auch ist aus der EP 1 544 438 A2 eine Abgasrückführklappe bekannt, deren antreibender Elektromotor an der vom Getriebe abgewandten Seite im Gehäuse über ein metallisches Federelement axial belastet wird, an dessen radialen Innenseite drei Nasen ausgebildet sind, die das B-Lager des Motors aufnehmen.

Aufgabe der Erfindung ist daher die Bereitstellung einer langlebigen Antriebsanordnung, welche einerseits eine axiale Verspannung von einem Antrieb in einem Gehäuse ermöglicht, schwingungsdämpfend ist und den Antrieb andererseits zuverlässig radial lagert. Dabei soll die Montage möglichst einfach sein, so dass eine möglichst große Toleranzunempfindlichkeit der Gehäuseteile gegeben sein soll. Dabei soll die Antriebsanordnung kostengünstig herstellbar sein. Weitere Aufgabe der Erfindung ist es ein Abgasrückführventil mit einer Antriebsanordnung mit den genannten Vorteilen zu schaffen.

Diese Aufgaben werden durch eine Antriebsanordnung für ein Aggregat eines Verbrennungsmotors mit den Merkmalern des Anspruchs 1 sowie durch ein Abgasrückführventil mit den Merkmalen des Anspruchs 11 gelöst. Vorteilhafte Ausgestaltungen sind in den Unteransprüchen angegeben, deren Merkmale entsprechend der angegebenen Rückbezüge in vorteilhafter Weise miteinander kombiniert werden können.

Dadurch, dass das Gehäuse, in dem das Antriebselement angeordnet ist, ein feststehendes Aufnahmeteil und einen daran befestigten Deckel aufweist, der axial gegen einen Anschlag am feststehenden Aufnahmeteil anliegt, wobei das Zwischenelement radial zwischen Deckel und Antriebselement und elastisch verformt axial zwischen dem Antriebselement und dem Deckel angeordnet ist, wird eine schwingungsdämpfende Entkopplung des Elektromotors vom Gehäuse sowohl axial als auch radial erreicht. Das Antriebselement ist einfach zu montieren und die Gehäuseteile können mit großen Toleranzen kostengünstig hergestellt werden, da Größenunterschiede vom Zwischenelement ausgeglichen werden können. Zusätzlich weist das Zwischenelement einen ringförmigen elastischen Kragen auf, gegen den radial innen das Antriebselement anliegt und gegen den radial außen der Deckel anliegt. So wird auf einfache Weise zusätzlich zur axialen Lagerung und Vorspannung des Antriebselementes mit nur einem Bauteil das Antriebselement auch radial gedämpft im Deckel gelagert. Dabei ist das Zwischenelement einstückig aus einem Elastomer oder aus einem anderen elastischen nichtmetallischen Werkstoff gefertigt. So entsteht einerseits eine einfache Herstellbarkelt und Montage und andererseits werden gute elastische Eigenschaften sichergestellt, wobei durch Änderung der Shorehärte auch die Dämpfung geändert und damit Eigenresonanzen verschoben werden können.

Bezüglich des Abgasrückführventils wird dadurch, dass der Elektromotor axial gegen ein am Gehäuse ausgebildetes A-Lagerschild durch die Federkraft des elastisch verformten Zwischenelementes belastet ist und radial durch das Zwischenelement im Deckel gelagert ist, ebenfalls eine allseitige Schwingungsentkopplung erreicht und der Elektromotor im Gehäuse verspannt, wodurch im nachgeschalteten Getriebe ein sicherer Eingriff des Antriebszahnrades gewährleistet wird und die Übertragung der mechanischen Belastungen gedämpft wird. So erhöht sich die Lebensdauer des Elektromotors. Die Toleranzen zwischen Größe des Elektromotors, dem Aufnahmegehäuse und dem Deckel können deutlich erhöht werden.

Die nachfolgend beschriebenen Unteransprüche sind für verschiedene Verwendungen der Antriebsanordnung als auch speziell für das Abgasrückführventil in vorteilhafter Weise verwendbar.

Vorzugsweise weist das Zwischenelement eine zentrale Öffnung auf, durch die oder in die ein axiales Ende des Antriebselementes ragt. Auf diese Weise wird das Ende des Antriebselementes umfasst, so dass bei der Montage das Zwischenelement einfach aufgeschoben werden kann.

In einer vorteilhaften Ausführungsform weist das Zwischenelement einen scheibenförmigen Teil auf, von dem aus sich in Axialrichtung ein oder mehrere Vorsprünge erstrecken, welche zwischen einer axialen Anlagefläche des Deckels und einer axialen Anlagefläche des Antriebselements elastisch verformt angeordnet sind. Diese Vorsprünge sorgen für die axiale Entkopplung und einen axialen Toleranzausgleich des Antriebselementes vom Deckel. Die Auflagefläche zum Deckel oder zum Antriebselement wird verringert, wodurch bei gleichem Härtegrad im Vergleich zu einer vollflächigen Auflage eine stärkere Federwirkung beziehungsweise Elastizität erzielt wird und die zur Wärmeübertragung zur Verfügung stehende Fläche verringert wird.

In einer bevorzugten Ausführung ist der sich axial erstreckende Vorsprung ringförmig ausgebildet. Dies führt zusätzliche zu einer abdichtenden Funktion des Zwischenelementes.

In einer alternativen Ausgestaltung der Erfindung sind die sich axial erstreckenden Vorsprünge als mehrere über den Umfang verteilte Noppen ausgebildet. Dies führt zu einer besonders guten elastischen Wirkung der einzelnen Noppen.

In einer weiterführenden besonderen Ausführungsform umgibt der Kragen die zentrale Öffnung und das axiale Ende des Antriebselementes und ist radial von einer am Deckel ausgebildeten topfförmigen Aufnahme umgeben. Somit erfolgt die Lagerung des Antriebselementes direkt im Bereich des B-Lagers des Antriebselementes. Die topfförmige Aufnahme, in die das B-Lager ragt, kann mit entsprechend großer Toleranz hergestellt werden, da eine Berührung zwischen der Aufnahme und dem B-Lagerbereich durch den Kragen verhindert wird.

In einer weiterführenden vorteilhaften Ausbildung weist der Kragen an seiner Außenumfangsfläche entlang des Außenumfangs verteilte Erhebungen auf. Dies erleichtert die Montage, da diese Erhebungen einfacher radial zusammengedrückt werden können. So wird ein Aufschieben mit geringer Kraft bei guten Dämpfungseigenschaften in Radialrichtung sichergestellt.

In einer vorteilhaften alternativen Ausgestaltung ist der Kragen des Zwischenelementes am Außenumfang der Scheibe angeordnet, so dass die radiale Lagerung über den Außenumfang des Antriebelementes erfolgt.

Der Deckel mit seiner topfförmigen Aufnahme ist vorzugsweise als Tiefziehteil ausgebildet. Dies ermöglicht eine besonders kostengünstige Herstellung. Zu enge Toleranzen sind nicht mehr gefordert, so dass im Vergleich zu den bekannten Lagerungen die beim Tiefziehen entstehenden Radien ohne Nachteile toleriert werden können.

Die erfindungsgemäße Antriebsanordnung und das erfindungsgemäße Abgasrückführventil zeichnen sich somit durch eine lange Lebensdauer aufgrund allseitiger Schwingungsentkopplung und durch eine besonders kostengünstige Herstellbarkeit und Montage aus, da einfach herzustellende Einzelteile verwendet werden können und eine hohe Toleranzunempfindlichkeit besteht.

Weitere Vorteile und Merkmale werden anhand mehrerer Ausführungsbeispiele in den nachfolgenden Figurenbeschreibungen aufgezeigt.
Figur 1 zeigt eine Seitenansicht einer ersten erfindungsgemäßen Antriebsanordnung für ein Abgasrückführventil in teilweise geschnittener Darstellung.
Figur 2 zeigt eine Seitenansicht des Zwischenelementes aus Figur 1 in geschnittener Darstellung.
Figur 3 zeigt eine Draufsicht auf das Zwischenelement gemäß Figur 2.
Figur 4 zeigt schematisch eine Seitenansicht einer alternativen erfindungsgemäßen Antriebsanordnung.

Gleiche Merkmale sind in allen Figuren mit identischen Bezugszeichen versehen.

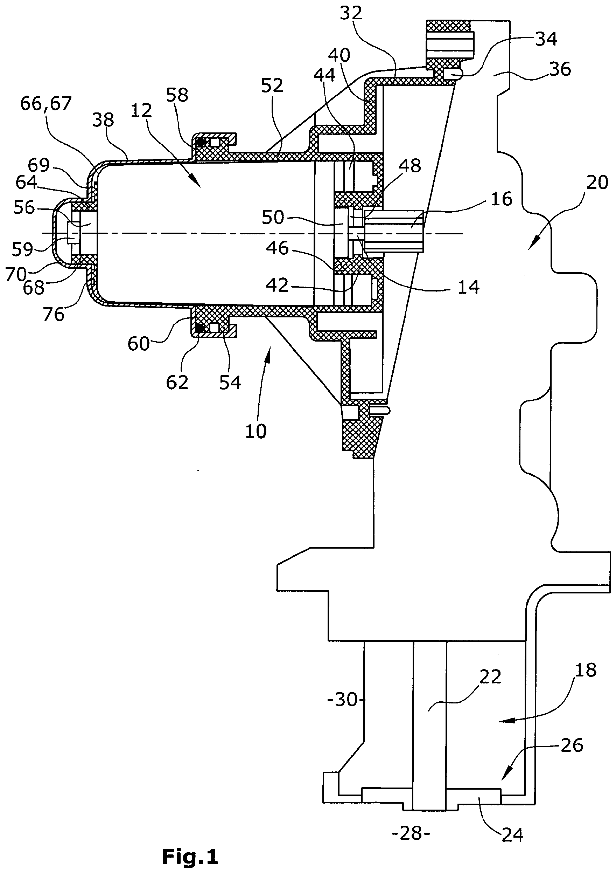

In der Figur 1 ist eine Antriebsanordnung dargestellt, die ein Gehäuse 10 aufweist, in dem ein Antriebselement 12 in Form eines Elektromotors angeordnet ist. Im vorliegenden Ausführungsbeispiel ist auf einer Antriebswelle 14 des Elektromotors 12 ein Antriebsritzel 16 drehfest angeordnet, welches zur Betätigung eins Abgasrückführventils 18 über ein Getriebe 20 dient. Das Abgasrückführventil 18 weist einen auf einer Ventilstange 22 angeordneten Ventilteller 24 auf, der einen Durchlass 26 zwischen einem Einlass 28 und einem Auslass 30 in bekannter Weise beherrscht. Die Antriebsanordnung kann jedoch auch zur Betätigung oder zum Antrieb von Pumpen oder Klappen verwendet werden.

Das dargestellte Gehäuse 10 ist mehrteilig ausgebildet und umfasst ein geschnitten dargestelltes feststehendes Aufnahmeteil 32, das unter Zwischenlage einer Dichtung 34 an einem Getriebegehäuseteil 36 befestigt ist sowie einen am Aufnahmeteil 32 befestigten Deckel 38. Das Aufnahmeteil 32 weist einen Abdeckabschnitt 40 auf, in dem die Dichtung 34 angeordnet ist und über den das Getriebegehäuseteil 36 verschlossen wird. Im zur Dichtung 34 radial inneren Bereich weist dieser Abdeckabschnitt 40 ein A-Lagerschild 42 auf, in dem eine Platine 44 zur Steuerung und Kontaktierung des Elektromotors 12 gelagert ist und an dem ein ringförmiger Anschlag 46 ausgebildet ist, gegen den der Elektromotor 12 axial anliegt. Im Innern dieses Anschlags 46 ist eine Öffnung 48 ausgebildet, durch die das Antriebsritzel 16 ragt und die das erste Radiallager 50 des Elektromotors 12 radial umgibt.

Zur zum Getriebegehäuseteil 36 entgegengesetzten Seite erstreckt sich ein hohlzylindrischer Abschnitt 52, der den Elektromotor 12 radial umgibt und an dessen Ende eine ringförmige Erweiterung 54 ausgebildet ist. Nach dem Einschieben des Elektromotors 12 in diesen hohlzylindrischen Abschnitt 52 des Aufnahmeteils 32 wird über den Elektromotor 12 der Deckel 38 geschoben. Dieser ist ein durch Tiefziehen hergestelltes Blechteil, welches ebenfalls den Elektromotor 12 über den nicht vom hohlzylindrischen Abschnitt 52 bedeckten Abschnitt radial umgibt.

Der Deckel 38 weist im Wesentlichen eine Topfform mit drei stufenförmig sich reduzierenden Durchmessern auf. Der breiteste Durchmesser umschließt die Erweiterung 54 am Aufnahmeteil 32, während der mittlere Abschnitt den Elektromotor 12 mit geringem Abstand radial umgibt. Der hintere nach hinten geschlossene Abschnitt umgibt einen B-Lagerabschnitt 56 des Elektromotors 12, welcher ein axiales Ende 59 des Elektromotors 12 bildet.

Beim Zusammenbau wird der weiteste Durchmesser über die Erweiterung 54 geschoben bis eine erste Stufe 58 zwischen den beiden größten Durchmessern des Deckels 38 gegen einen Anschlag 60, der durch das axiale Ende der Erweiterung 54 gebildet wird, anliegt. Die ringförmige Erweiterung 54 weist eine zur ersten Stufe 58 gewandte ringförmige Ausnehmung auf, in der ein O-Ring 62 angeordnet ist, so dass eine dichte Verbindung entsteht. Das Ende des Deckels 38 wird anschließend hinter der Erweiterung 54 gebördelt und somit am feststehenden Aufnahmeteil 32 befestigt.

Bei diesem Aufschieben des Deckels 38 gegen den Anschlag 60, wird jedoch erfindungsgemäß auch ein zuvor über den B-Lagerabschnitt 56 geschobenes Zwischenelement 64 elastisch verformt, welches in diesem Zustand vorgespannt zwischen einer Rückwand 66 des Elektromotors 12, die als axiale Anlagefläche 67 des Elektromotors dient, und einer zweiten Stufe des Deckels 38, die den Übergang zwischen dem kleinsten und dem mittleren Durchmesser des Deckels 32 bildet und als axiale Anlagefläche 69 des Deckels 32 dient, eingeklemmt ist. Gleichzeitig wird ein ringförmiger Kragen 68 des Zwischenelementes 64, der den B-Lagerabschnitt 56 und damit das axiale Ende 59 des Elektromotors 12 umgibt in einer topfförmigen Aufnahme 70 des Deckels, welche durch den Abschnitt des Deckels 38 mit kleinstem Durchmesser gebildet wird, aufgenommen und radial verspannt.

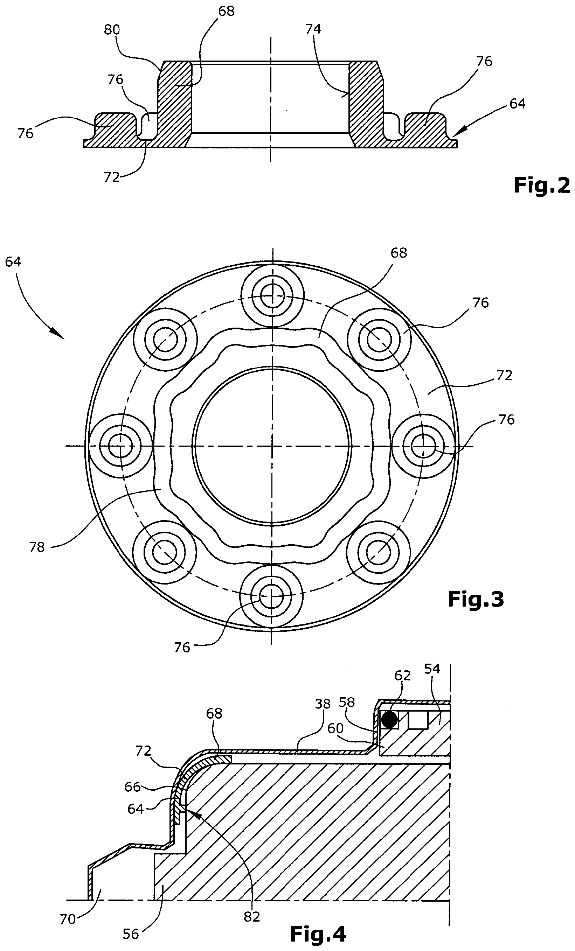

Dieses Zwischenelement 64 ist aus einem Elastomer hergestellt und besteht, wie in den Figuren 2 und 3 zu erkennen ist, aus einem scheibenförmigen Teil 72, welches eine zentrale Öffnung 74 aufweist. Vom scheibenförmigen Teil 72 erstrecken sich im radial äußeren Bereich des scheibenförmigen Teils 72 in axialer Richtung über den Umfang verteilt acht Vorsprünge in Form von Noppen 76. Diese Noppen 76 werden beim Zusammenbau zwischen den Anlageflächen 67, 69 des Elektromotors 12 und des Deckels 38 axial zusammengedrückt. Sie weisen in Richtung des Deckels 38, so dass der scheibenförmige Teil 72 gegen die Rückwand 66 des Elektromotors 12 anliegt. Vom radial inneren Bereich des scheibenförmigen Teils 72 aus erstreckt sich die Öffnung 74 umgebend der Kragen 68 in axialer Richtung. Dieser Kragen 68 weist an seiner Außenseite ebenfalls acht Erhebungen 78 auf, so dass eine wellenförmige Oberfläche entsteht, wobei sich jede Erhebung 78 vom scheibenförmigen Teil 72 bis kurz vor das axialen Ende des Kragens 68 erstreckt. Das Ende ist am Außenumfang des Kragens mit einer Fase 80 versehen, wodurch beim Aufschieben des Deckels 38 über die Fase 80 auf das Zwischenelement 64 eine allmähliche Zentrierung des B-Lagerabschnitts 56 in der topfförmigen Aufnahme 70 erfolgt. So wird die Montage deutlich erleichtert, da ein radialer Druck erst nach Überschreiten der Fase 80 beim Aufschieben auf den Kragen 68 erzeugt wird.

Durch die Elastizität des Zwischenelementes 64 wird somit eine in axialer und radialer Richtung schwingungsgedämpfte Aufnahme des Elektromotors 12 im Deckel 38 erzeugt. Dabei kann der Deckel mit großen Toleranzen und Radien hergestellt werden, da diese vom Zwischenelement 64 ausgeglichen werden.

Bei der Ausführung gemäß der Figur 4 ist am scheibenförmigen Teil 72 ein ringförmiger Vorsprung 82 ausgebildet, der sich in Richtung der Rückwand 66 des Elektromotors 12 erstreckt und elastisch beim Zusammenbau verformt wird. Die radiale Lagerung des Elektromotors 12 im Deckel 38 erfolgt bei dieser Ausführung jedoch über den Außendurchmesser des Elektromotors 12 und somit am mittleren Durchmesser des Deckels 38. Der scheibenförmige Teil 72 des Zwischenelementes 64 weist einen größeren Durchmesser auf als der Elektromotor 12. Entsprechend wird der radial äußere, überstehende Bereich des scheibenförmigen Teils 72 beim Aufschieben des Deckels 38 nach innen geklappt und befindet sich eingeklemmt zwischen dem Außendurchmesser des Elektromotors 12 und dem mittleren Abschnitt des Deckels 38. Er bildet in diesem Zustand den Kragen 68, erstreckt sich jedoch im zusammengebauten Zustand in Richtung des feststehenden Aufnahmeteils 32.

Auch bei dieser Ausführung kann mit kostengünstig herstellbaren Einzelteilen bei erleichterter Montage eine Antriebsanordnung geschaffen werden, die eine lange Lebensdauer aufweist, da die Stoß- und Schwingungsbelastung auf das Antriebselement sowohl axial als auch radial deutlich reduziert wird. Besonders geeignet ist dieser Antrieb für ein Abgasrückführventil.

Es sollte deutlich sein, dass der Schutzbereich des Hauptanspruchs nicht auf die beschriebenen Ausführungsbeispiele begrenzt ist. Insbesondere können Mischformen der beiden Ausführungsformen oder andere Antriebselemente genutzt werden. Auch ist diese Anordnung für andere Verwendungen geeignet. Selbstverständlich sind auch weitere konstruktive Änderungen des Gehäuses, des Deckels oder des Antriebselementes denkbar, ohne den Schutzbereich der Hauptansprüche zu verlassen.

## Patentansprüche

1. Antriebsanordnung für ein Aggregat eines Verbrennungsmotors mit
einem Antriebselement (12),
einem Gehäuse (10),
und einem Zwischenelement (64), welches vorgespannt zwischen dem Antriebselement (12) und dem Gehäuse (10) angeordnet ist,
wobei das Gehäuse (10), in dem das Antriebselement (12) angeordnet ist, ein feststehendes Aufnahmeteil (32) und einen daran befestigten Deckel (38) aufweist, der axial gegen einen) Anschlag (60) am feststehenden Aufnahmeteil (32) anliegt, **dadurch gekennzeichnet , dass** das Zwischeneiement (64) radial zwischen dem Deckel (38) und dem Antriebselement (12) und elastisch verformt axial zwischen dem Antriebselement (12) und dem Deckel (38) angeordnet ist, wobei das Zwischenelement (64) einen sich axial erstreckenden ringförmigen elastischen Kragen (68) aufweist, gegen den radial innen das Antriebselement (12) anliegt und gegen den radial außen der Deckel (38) anliegt, wobei das Zwischenelement (64) einstückig aus einem Elastomer oder aus einem anderen elastischen nichtmetallischen Werkstoff gefertigt ist.

2. Antriebsanordnung für ein Aggregat eines Verbrennungsmotors nach Anspruch 1,
**dadurch gekennzeichnet, dass**
das Zwischenelement (64) eine zentrale Öffnung (74) aufweist, durch die oder in die ein axiales Ende (59) des Antriebselementes (12) ragt.

3. Antriebsanordnung für ein Aggregat eines Verbrennungsmotors nach einem der Ansprüche 1 oder 2,
**dadurch gekennzeichnet, dass**
das Zwischenelement (64) einen scheibenförmigen Teil (72) aufweist, von dem aus sich in Axialrichtung ein oder mehrere Vorsprünge (76; 82) erstrecken, welche zwischen einer axialen Anlagefläche (69) des Deckels (38) und einer axialen Anlagefläche (67) des Antriebselements (12) elastisch verformt angeordnet sind.

4. Antriebsanordnung für ein Aggregat eines Verbrennungsmotors nach Anspruch 3,
**dadurch gekennzeichnet, dass**
der sich axial erstreckende Vorsprung (82) ringförmig ausgebildet ist.

5. Antriebsanordnung für ein Aggregat eines Verbrennungsmotors nach Anspruch 3,
**dadurch gekennzeichnet, dass**
die sich axial erstreckenden Vorsprünge als mehrere über den Umfang verteilte Noppen (76) ausgebildet sind.

6. Antriebsanordnung für ein Aggregat eines Verbrennungsmotors nach einem der vorhergehenden Ansprüche,
**dadurch gekennzeichnet, dass**
der Kragen (68) die zentrale Öffnung (74) und das axiale Ende (59) des Antriebselementes (12) umgibt und radial von einer am Deckel (38) ausgebildeten topfförmigen Aufnahme (70) umgeben ist.

7. Antriebsanordnung für ein Aggregat eines Verbrennungsmotors nach einem der vorhergehenden Ansprüche,
**dadurch gekennzeichnet, dass**
der Kragen (68) an seiner Außenumfangsfläche entlang des Außenumfangs verteilte Erhebungen (78) aufweist.

8. Antriebsanordnung für ein Aggregat eines Verbrennungsmotors nach einem der Ansprüche 1 bis 5,
**dadurch gekennzeichnet, dass**
der Kragen (68) des Zwischenelementes (64) am Außenumfang des scheibenförmigen Teils (72) angeordnet ist.

9. Antriebsanordnung für ein Aggregat eines Verbrennungsmotors nach einem der vorhergehenden Ansprüche,
**dadurch gekennzeichnet, dass**
der Deckel (38) mit seiner topfförmigen Aufnahme (70) als Tiefziehteil ausgebildet ist.

10. Abgasrückführventil mit einer Antriebsanordnung nach einem der vorhergehenden Ansprüche mit
einem als Antriebselement (12) dienenden Elektromotor und einem Gehäuse (10, 36), in dem der als Antriebselement (12) dienende Elektromotor angeordnet ist, der über ein Getriebe (20) ein Ventil (18) antreibt, welches einen Durchlass (26) zwischen einem Einlass (28) und einem Auslass (30) beherrscht,
**dadurch gekennzeichnet, dass**
der Elektromotor (12) axial gegen ein am Gehäuse (10) ausgebildetes A-Lagerschild (42) durch die Federkraft des elastisch verformten Zwischenelementes (64) belastet ist und radial durch das Zwischenelement (64) im Deckel (38) gelagert ist.

## Claims

1. Actuating arrangement for a unit of an internal combustion engine with
a drive element (12)
a housing (10)
and an intermediate element (64) which is arranged in a prestressed manner between the drive element (12) and the housing (10), wherein the housing (10), in which the drive element (12) is arranged, comprises a fixed receiving part (32) and a cover (38) which is attached thereto and bears axially against a stop (60) on the fixed receiving part (32),
**characterized in that**
the intermediate element (64) is arranged radially between the cover (38) and the drive element (12) and is arranged elastically deformed axially between the drive element (12) and the cover (38), wherein the intermediate element (64) comprises an axially extending annular elastic collar (68) against which the drive element (12) abuts radially inwardly and against which the cover (38) abuts radially outwardly, wherein the intermediate element (64) is manufactured in unitary manner from an elastomer or from another elastic non-metallic material.

2. Actuating arrangement for a unit of an internal combustion engine according to claim 1,
**characterized in that**
the intermediate member (64) comprises a central opening (74) through or into which an axial end (59) of the drive member (12) projects.

3. Actuating arrangement for a unit of an internal combustion engine according to one of claims 1 or 2,
**characterized in that**
the intermediate element (64) comprises a disk-shaped part (72) from which one or more projections (76; 82) extend in the axial direction, which projections are arranged in an elastically deformed manner between an axial contact surface (69) of the cover (38) and an axial contact surface (67) of the drive element (12).

4. Actuating arrangement for a unit of an internal combustion engine according to claim 3,
**characterized in that**
the axially extending projection (82) is configured annularly.

5. Actuating arrangement for a unit of an internal combustion engine according to claim 3,
**characterized in that**
the axially extending projections are configured as a plurality of circumferentially distributed nubs (76).

6. Actuating arrangement for a unit of an internal combustion engine according to one of the preceding claims,
**characterized in that**
the collar (68) surrounds the central opening (74) and the axial end (59) of the drive element (12) and is radially surrounded by a cup-shaped receptacle (70) formed at the cover (38).

7. Actuating arrangement for a unit of an internal combustion engine according to one of the preceding claims,
**characterized in that**
the collar (68) comprises protrusions (78) distributed along the outer circumference thereof.

8. Actuating arrangement for a unit of an internal combustion engine according to any one of claims 1 to 5,
**characterized in that**
the collar (68) of the intermediate element (64) is arranged on the outer circumference of the disk-shaped part (72).

9. Actuating arrangement for a unit of an internal combustion engine according to one of the preceding claims,
**characterized in that**
the cover (38) with its pot-shaped receptacle (70) is configured as a deep-drawn part.

10. Exhaust gas recirculation valve with an actuating arrangement according to one of the preceding claims with
an electric motor serving as a drive element (12) and a housing (10, 36) in which the electric motor serving as a drive element (12) is arranged, which drives a valve (18) via a gear unit (20), which valve controls a passage (26) between an inlet (28) and an outlet (30),
**characterized in that**
the electric motor (12) is axially loaded against an A-bearing shield (42) formed on the housing (10) by the spring force of the elastically deformed intermediate element (64) and is radially supported in the cover (38) by the intermediate element (64).

## Revendications

1. Ensemble d'entraînement pour un agrégat d'un moteur à combustion interne avec
un élément d'entraînement (12),
un boîtier (10),
et un élément intermédiaire (64), qui est disposé de manière précontrainte entre l'élément d'entraînement (12) et le boîtier (10),
le boîtier (10), dans lequel est disposé l'élément d'entraînement (12), comprenant une partie de réception fixe (32) et un couvercle (38) qui y est fixé et qui s'applique axialement contre une butée (60) sur la partie de réception fixe (32),
**caractérisé en ce que**
l'élément intermédiaire (64) est disposé radialement entre le couvercle (38) et l'élément d'entraînement (12) et, déformé élastiquement, axialement entre l'élément d'entraînement (12) et le couvercle (38), l'élément intermédiaire (64) comprend un collier élastique annulaire (68) s'étendant axialement, contre lequel s'appuie radialement à l'intérieur l'élément d'entraînement (12) et contre lequel s'appuie radialement à l'extérieur le couvercle (38),
l'élément intermédiaire (64) étant fabriqué d'une seule pièce en élastomère ou en un autre matériau élastique non métallique.

2. Ensemble d'entraînement pour un agrégat d'un moteur à combustion interne selon la revendication 1,
**caractérisé en ce que**
l'élément intermédiaire (64) comprend une ouverture centrale (74) à travers laquelle ou dans laquelle fait saillie une extrémité axiale (59) de l'élément d'entraînement (12).

3. Ensemble d'entraînement pour un agrégat d'un moteur à combustion interne selon l'une des revendications 1 ou 2,
**caractérisé en ce que**
l'élément intermédiaire (64) comprend une partie en forme de disque (72) à partir de laquelle s'étendent, dans la direction axiale, une ou plusieurs saillies (76 ; 82) qui sont disposées, en étant déformées élastiquement, entre une surface d'appui axiale (69) du couvercle (38) et une surface d'appui axiale (67) de l'élément d'entraînement (12).

4. Ensemble d'entraînement pour un agrégat d'un moteur à combustion interne selon la revendication 3,
**caractérisé en ce que**
la saillie (82) s'étendant axialement est de forme annulaire.

5. Ensemble d'entraînement pour un agrégat d'un moteur à combustion interne selon la revendication 3,
**caractérisé en ce que**
les saillies s'étendant axialement sont formées comme une pluralité de picots (76) répartis sur la circonférence.

6. Ensemble d'entraînement pour un agrégat d'un moteur à combustion interne selon l'une quelconque des revendications précédentes,
**caractérisé en ce que**
le collier (68) entoure l'ouverture centrale (74) et l'extrémité axiale (59) de l'élément d'entraînement (12) et est entouré radialement par un réceptacle en forme de pot (70) formé sur le couvercle (38).

7. Ensemble d'entraînement pour un agrégat d'un moteur à combustion interne selon l'une quelconque des revendications précédentes,
**caractérisé en ce que**
le collier (68) comprend sur sa surface périphérique extérieure des bossages (78) distribués le long de la périphérie extérieure.

8. Ensemble d'entraînement pour un agrégat d'un moteur à combustion interne selon l'une quelconque des revendications 1 à 5,
**caractérisé en ce que**
le collier (68) de l'élément intermédiaire (64) est disposé sur la périphérie extérieure de la partie en forme de disque (72).

9. Ensemble d'entraînement pour un agrégat d'un moteur à combustion interne selon l'une quelconque des revendications précédentes,
**caractérisé en ce que**
le couvercle (38) avec son réceptacle (70) en forme de pot est réalisé sous la forme d'une pièce emboutie.

10. Vanne de recirculation des gaz d'échappement avec un ensemble d'entraînement selon l'une des revendications précédentes, comprenant un moteur électrique formant élément d'entraînement (12) et un boîtier (10, 36) dans lequel est disposé le moteur électrique formant élément d'entraînement (12) qui entraîne, par l'intermédiaire d'un engrenage (20), une soupape (18) qui commande un passage (26) entre une entrée (28) et une sortie (30),
**caractérisé en ce que**
le moteur électrique (12) est poussé axialement contre un flasque A (42) formé sur le boîtier (10) par la force élastique de l'élément intermédiaire (64) déformé élastiquement et est supporté radialement par l'élément intermédiaire (64) dans le couvercle (38).
